# FASCICULE DE BREVET EUROPEEN

(11) **EP 2 885 230 B1**
(45) Date de publication et mention de la délivrance du brevet: **21.06.2017**
(21) Numéro de dépôt: 13750050.0
(22) Date de dépôt: 14.08.2013
(51) Int. Cl.: B65G 35/06, B65G 35/08, B65G 47/90

(54) **INSTALLATION DE TRAITEMENT D'ARTICLES COMPRENANT UN DISPOSITIF A VIS DE TRANSFERT**
ANLAGE ZUR BEHANDLUNG VON ARTIKELN MIT EINER TRANSFERSCHRAUBENVORRICHTUNG
INSTALLATION FOR TREATING ARTICLES COMPRISING A TRANSFER SCREW DEVICE

(30) Priorité: 16.08.2012 FR 1257839
(43) Date de publication de la demande: 24.06.2015
(73) Titulaire: Serac Group, 72400 La Ferté Bernard (FR)
(72) Inventeur: BRUNEE, Jacky, 72260 MAROLLES LES BRAULTS (BR)
(74) Mandataire: Lavialle, Bruno François Stéphane
(86) Numéro de dépôt international: PCT/EP2013/067034
(87) Numéro de publication internationale: WO 2014/027044

(56) Documents cités:
- EP-A1- 0 010 131
- EP-A1- 0 144 478
- EP-A1- 0 447 123
- EP-A1- 2 100 815
- WO-A1-2005/023518
- DE-A1- 3 639 271
- FR-A1- 2 370 658
- US-B1- 6 398 006

## Description

La présente invention concerne une installation de traitement d'articles comportant un dispositif de transfert des articles.

Les articles sont par exemple des récipients finis ou sous forme intermédiaire au cours de leur fabrication. L'installation de traitement est par exemple une installation de conditionnement d'un produit dans des récipients introduits finis à l'entrée de l'installation : l'installation comporte alors notamment une station de nettoyage et/ou décontamination des récipients, une station de remplissage et une installation de bouchage des récipients. L'installation peut être également une installation de conditionnement opérant à partir de préformes des récipients. L'installation comporte alors notamment une station de chauffage des préformes, une installation de soufflage des préformes pour former les récipients, une station de remplissage et une station de bouchage des récipients.

Entre deux stations consécutives sont montés un ou plusieurs dispositifs de transfert chargés d'acheminer les récipients d'une station à l'autre.

L'installation de traitement se présente alors sous la forme d'une chaîne le long de laquelle les récipients sont déplacés avec un pas d'avancement prédéterminé (le pas d'avancement est l'écartement qui est maintenu entre les récipients au cours de leur progression dans la chaîne).

Ce type d'architecture est particulièrement efficace lorsque le pas d'avancement des récipients est le même dans les stations de travail et n'est pas amené à être modifié pour passer du traitement d'une série de récipients à une autre série de récipients de dimensions différentes.

En revanche, lorsque le pas d'avancement des récipients en sortie d'une station amont est différent du pas d'avancement des récipients en entrée d'une station aval, par exemple lorsque l'une de ces stations traite des lots de récipients alors que l'autre station traite les récipients individuellement ou que les stations ont des temps de cycle différents, le dispositif de transfert doit comprendre une portion de stockage tampon des récipients permettant d'accumuler les récipients puis de les amener au pas correct pour alimenter la station aval. Une telle portion de stockage a généralement des dimensions relativement importantes et augmente l'encombrement de la chaîne soit en longueur, soit localement en largeur selon l'orientation du dispositif de stockage par rapport à la chaîne.

En outre, toute modification du pas d'avancement des récipients dans une des stations de travail nécessite des interventions assez lourdes sur le dispositif de transfert et parfois le changement complet de celui-ci. Une telle modification du pas d'avancement est relativement fréquente dans les machines de soufflage qui sont généralement adaptées pour pouvoir fabriquer des récipients de différentes contenances, le volume global des récipients soufflés simultanément étant au plus égal à la capacité maximale de soufflage de la machine. Une telle machine de soufflage peut par exemple souffler simultanément : deux récipients de trois litres, quatre récipients d'un litre ou six récipients d'un demi-litre en fonction des moules qui y sont montés. La flexibilité des installations dépend donc pour beaucoup des dispositifs de transfert qui sont actuellement relativement peu souples. Des installations permettant de faire varier le pas d'avancement de produits sont connues par exemple des documents EP 0 447 123 Al ou FR 2 370 658. Ces documents décrivent chacun une installation avec des chariots se déplaçant dans une trajectoire fermée et dont l'espacement est dicté au moins sur une partie de la trajectoire, par l'interaction avec une vis dont le pas du filet n'est pas constant. Ces installations sont malgré tout peu flexibles au changement de dimension des produits transportés. Un but de l'invention est de fournir un moyen simple et fiable pour augmenter la flexibilité de telles installations.

A cet effet, on prévoit, selon l'invention, une installation de traitement d'articles selon la revendication 1. La vis a deux fonctions : elle maintient un écartement entre les chariots, égal au pas de la vis, tant qu'ils sont en contact avec elle, et assure le déplacement des chariots le long du rail. Lorsque les chariots ne sont plus en engagement avec la vis, ils sont en contact les uns avec les autres et se poussent mutuellement sous l'effet du mouvement imprimé par la vis à chaque chariot quittant la vis et entrant en contact avec son prédécesseur. Il est ainsi défini deux zones le long du dispositif de transfert : une première zone dans laquelle les récipients sont en contact les uns avec les autres, les chariots étant espacés les uns des autres du premier écartement, et une deuxième zone (correspondant au tronçon rectiligne) dans laquelle les chariots sont maintenus écartés les uns des autres par la vis jusqu'à ce que les chariots soient espacés les uns des autres du deuxième écartement. Il est de la sorte réalisé de manière particulièrement simple une modification du pas d'avancement des articles le long du dispositif de transfert. On comprend qu'en remplaçant une vis ayant un premier pas par une vis ayant un deuxième pas différent du premier pas, on modifie simplement l'écartement des chariots le long de la vis.

D'autres caractéristiques et avantages de l'invention ressortiront à la lecture de la description qui suit de modes de réalisation particuliers non limitatifs de l'invention.

Il sera fait référence aux dessins annexés, parmi lesquels :

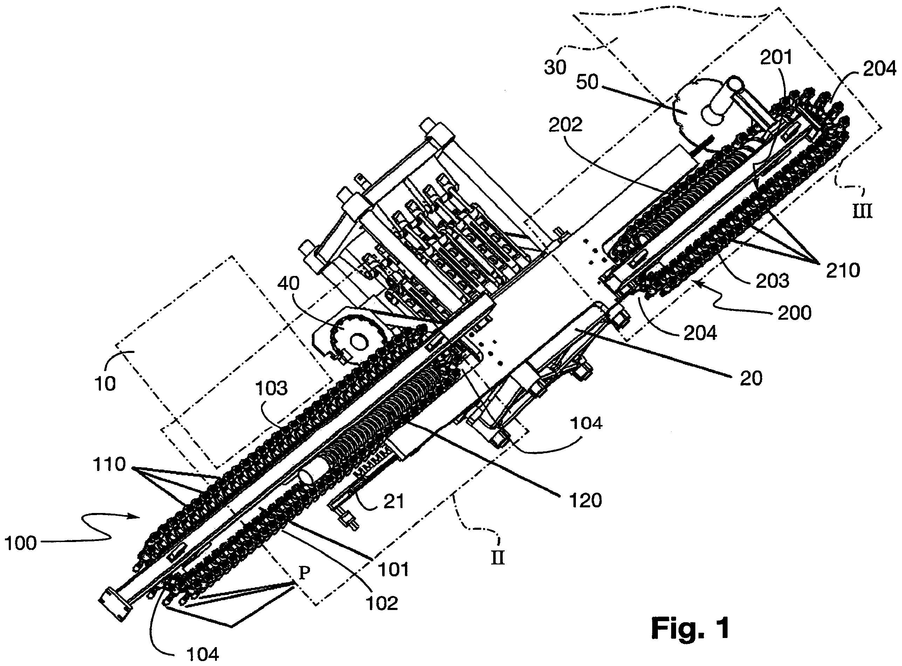

- la figure 1 est une vue en perspective d'une installation de traitement de récipients conforme à l'invention,

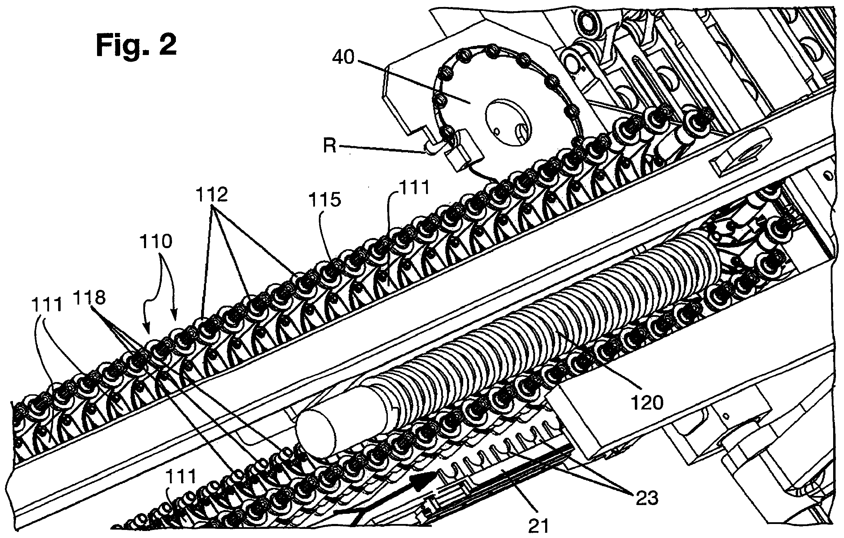

- la figure 2 est une vue agrandie en perspective de la zone II de la figure 1, sensiblement selon le même angle de vue,
- la figure 3 est une vue agrandie en perspective de la zone III de la figure 1 vue de l'arrière,
- la figure 4 est une vue agrandie en perspective de la zone IV de la figure 3 selon un point de vue décalé vers la droite, selon une variante de réalisation,

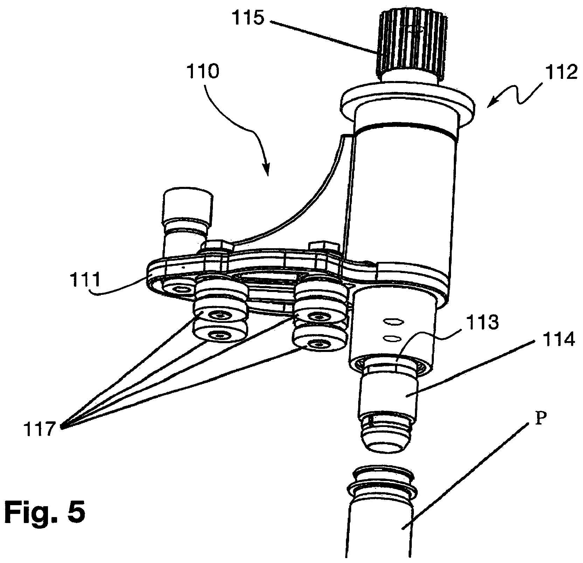

- la figure 5 est une vue en perspective d'un chariot de transport des préformes et récipients.

L'invention est ici décrite en application au traitement de récipients R et plus précisément à une installation assurant le chauffage de préformes P, le soufflage des préformes dans des moules pour former des récipients, le remplissage et le bouchage des récipients. Les préformes et les récipients comprennent un goulot qui définit une ouverture supérieure des préformes P et des récipients R et qui est entouré d'une collerette.

En référence aux figures, l'installation comprend ainsi, de l'amont vers l'aval par référence à un sens de déplacement des préformes P et des récipients R : une station de chauffage symbolisée en 10, une station de soufflage portant la référence 20 et une unité de remplissage symbolisée en 30. La station de chauffage 10, en forme de tunnel, reçoit en entrée des préformes P et les chauffe pour que les préformes P atteignent une température adaptée à la mise en forme par soufflage. La station de soufflage 20 comprend une batterie de moules à la forme des récipients R et une unité de soufflage agencée pour introduire de l'air sous pression dans les préformes P reçues dans les moules afin de plaquer la paroi des préformes P contre la surface intérieure des moules et ainsi former les récipients R. La station de remplissage 30 comprend des buses de remplissage pour remplir les récipients en question. La station de chauffage 10, la station de soufflage 20 et la station de remplissage 30 sont connues en elles-mêmes et ne seront pas plus décrites ici. L'installation comporte également une station de décontamination des préformes P et une station de bouchage des récipients R qui sont elles aussi connues en elles-mêmes et ne sont ni décrites, ni représentées.

L'alimentation en préformes de la station de soufflage 20 est assurée par un peigne 21 qui est animé d'un mouvement rectangulaire et est agencé pour saisir en une fois autant de préformes P que la batterie de moules comporte de moules et amener lesdites préformes P dans les moules. Le peigne 21 est à cette fin équipé de moyens de préhension connus en eux-mêmes, ici des pinces 23.

L'évacuation des récipients hors de la station de soufflage 20 est assurée par un peigne 22 qui est animé d'un mouvement rectangulaire et est agencé pour saisir autant de récipients que la batterie de moules comporte de moules et extraire lesdits récipients des moules et de la station de soufflage 20. Le peigne 22 est à cette fin équipé de moyens de préhension connus en eux-mêmes, ici des pinces non visibles sur les figures.

La station de soufflage 20 comprend également des moyens de déplacement et de commande des peignes 21, 22 qui sont connus en eux-mêmes et ne seront pas détaillés ici.

L'installation comprend en outre un premier dispositif de transfert 100 entre la station de chauffage 10 et la station de soufflage 20, un deuxième dispositif de transfert 200 entre la station de soufflage 20 et la station de remplissage 30, une première unité de transfert intermédiaire 40 entre la station de chauffage 10 et le dispositif de transfert 100 et une deuxième unité de transfert intermédiaire 50 entre le dispositif de transfert 200 et la station de remplissage 30.

Les dispositifs de transfert 100 et 200 ont des structures analogues. Chaque dispositif de transfert 100, 200 comporte un rail 101, 201 définissant une trajectoire de déplacement fermée pour des chariots, généralement désignés en 110, 210, qui sont montés sur le rail pour se déplacer librement le long de celui-ci.

Chaque rail 101, 201 possède deux tronçons rectilignes 102, 103, 202, 203 qui s'étendent parallèlement l'un à l'autre et qui sont reliés l'un à l'autre par des tronçons courbes 104, 204. Les tronçons rectilignes 102, 103, 202, 203 s'étendent parallèlement aux peignes 21, 22, les tronçons rectilignes 102, 202 s'étendant en regard des peignes 21, 22.

Les chariots 110, 210 sont pourvus chacun d'un corps 111, 211 pourvu de moyens d'entraînement 112, 212 respectivement d'une préforme et d'un récipient.

Les moyens d'entraînement 112 comportent une broche 113 verticale ayant une extrémité inférieure pourvue d'un organe de saisie 114 d'une préforme. L'organe de saisie 114 comprend ici un élément expansible radialement pour assurer une saisie par l'intérieur du goulot de la préforme. La broche 113 est montée sur le corps 111 pour pivoter autour de la verticale et possède une portion dentée 115 engrenant sur un engrenage linéaire, non visible sur les figures, courant le long du rail 101 pour entraîner la broche 113 en rotation lors du déplacement du chariot 110. L'engrenage est par exemple une courroie crantée. La broche 113 est également montée sur le corps 111 pour coulisser selon une direction verticale entre une position basse de saisie des préformes et une position haute de libération des préformes. La broche 113 possède une portion coopérant avec un chemin de came fixe pour déplacer les broches 113 entre leurs deux positions. Ladite portion et le chemin de came fixe ne sont pas visibles sur les figures.

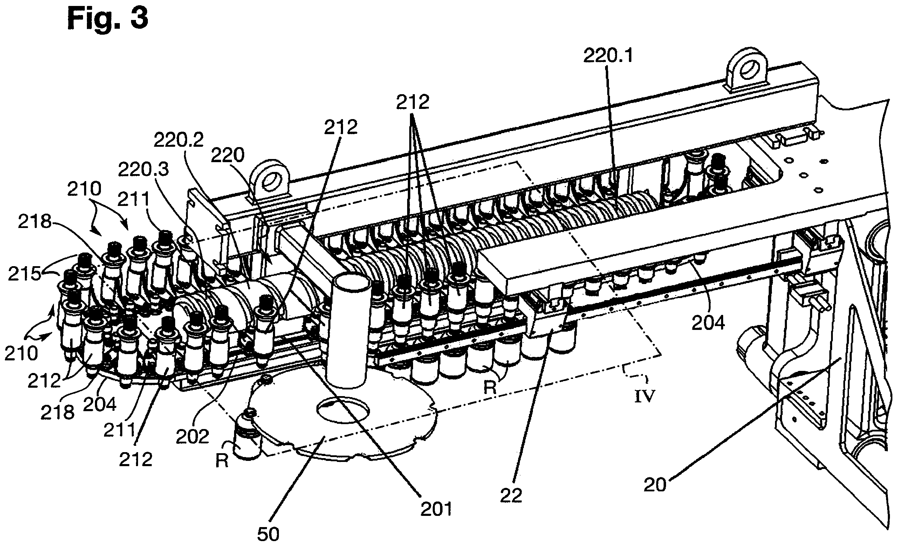

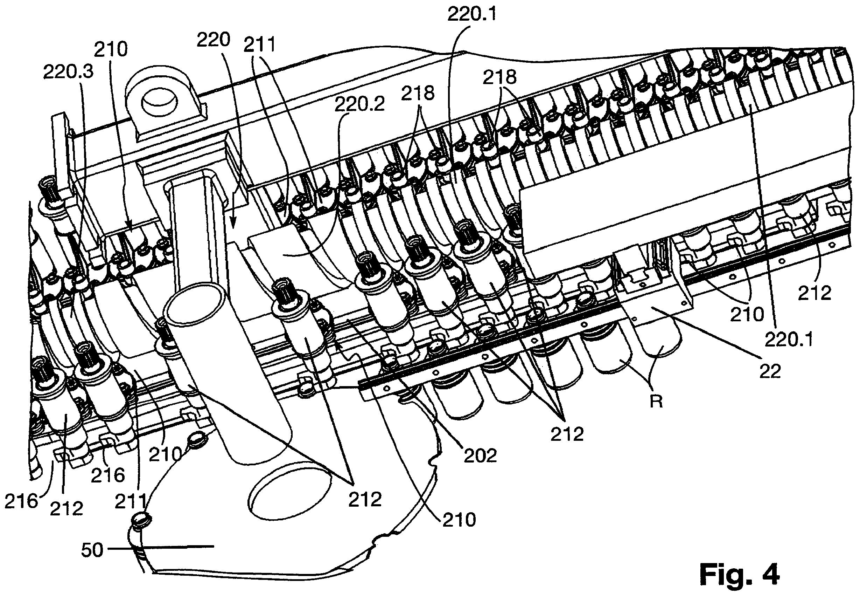

Les moyens d'entraînement 212 sont identiques aux moyens d'entraînement 112 (on distingue sur la figure 3 les corps 211, les organes de saisie 214 et les portions dentées 215). En variante, comme représenté sur la figure 4, les moyens d'entraînement 212 comportent un doigt fixe 216 qui s'étend en saillie latérale du corps 211 et qui est agencé pour pousser les récipients le long d'un organe fixe (non visible sur la figure 4) de support des récipients. L'organe fixe de support comprend deux guides allongés et parallèles l'un à l'autre qui s'étendent sensiblement le long du tronçon rectiligne 202 et qui sont écartés l'un de l'autre d'une distance supérieure au diamètre du goulot mais inférieure au diamètre de la collerette de manière à supporter par leur collerette les récipients dont le goulot est reçu entre les deux guides. Bien que des portions dentées analogues aux portions dentées 215 soient visibles sur la figure 4, celles-ci sont sans utilité dans cette variante. Cette variante est également utilisable avec les moyens d'entraînement 112.

Les corps 111, 211 sont pourvus de quatre galets pivotants 117 (les galets des chariots 210 ne sont pas visibles sur les figures), d'axes verticaux, entre lesquels s'étend le rail 101, 201 pour assurer le guidage des chariots 110, 210 le long des rails 101, 201 et autoriser le libre déplacement des chariots 110, 210 le long desdits rails 101, 201.

Chaque dispositif de transfert 100, 200 comprend une vis 120, 220 s'étendant le long du tronçon rectiligne 102, 202 du rail 101, 201 et ayant un filet avec lequel coopèrent des doigts 118, 218 solidaires des corps 111, 211 chariots 110, 210 pour entraîner les chariots 110, 210 le long du tronçon rectiligne 102, 202. De préférence, chaque doigt 118, 218 est formé d'un galet pivotant d'axe vertical afin de limiter les frottements.

La vis 120 a un pas permettant de maintenir les chariots 110 à un écartement sensiblement identique à l'écartement existant entre les chariots 110 lorsque ceux-ci sont en contact les uns avec les autres. Le nombre de chariots 110 est tel que les chariots 110 sont en contact les uns avec les autres lorsqu'ils ne coopèrent pas avec la vis 120. L'écartement maintenu par la vis 120 permet d'amener et maintenir les préformes supportées par les chariots 110 en regard des organes de saisie du peigne 21 de manière à permettre le passage d'un lot de récipients des chariots 110 au peigne 21.

La vis 220 a un pas qui varie progressivement de telle manière que la vis 220 possède un tronçon amont 220.1 assurant un premier écartement des chariots 210 égal à l'écartement des chariots 210 lorsqu'ils sont en contact les uns avec les autres, un tronçon central 220.2 assurant un deuxième écartement des chariots 210 supérieur au premier écartement et un tronçon aval 220.3 assurant un écartement des chariots égal au premier écartement. Le nombre de chariots 210 est tel que les chariots 210 sont en contact les uns avec les autres lorsqu'ils ne coopèrent pas avec la vis 220. Lors de son mouvement, le peigne 22 est amené à s'étendre en regard du tronçon central 220.2 et le deuxième écartement maintenu par la vis 220 permet d'amener et maintenir les chariots 210 en regard des organes de saisie du peigne 22 de manière à permettre le passage d'un lot de récipients du peigne 22 aux chariots 210.

La première unité intermédiaire de transfert 40 est montée tangente au tronçon rectiligne 103 du rail 101 pour sortir les récipients de la station de chauffage 10 et les amener sur les chariots 110. La première unité intermédiaire de transfert 40 est une étoile ayant des alvéoles espacées d'un écartement correspondant à l'écartement des chariots 210 le long du tronçon rectiligne 103.

La deuxième unité intermédiaire de transfert 50 est montée tangente au tronçon rectiligne 202 en regard du tronçon aval 220.3 de la vis 220 pour prendre les récipients des chariots et les amener vers la station de remplissage 30. La deuxième unité intermédiaire de transfert 50 est une étoile ayant des alvéoles espacées d'un écartement correspondant à l'écartement des chariots 210 maintenu par le tronçon aval 220.3 de la vis 220.

On constate que, lors du passage des préformes et des récipients entre les chariots et les peignes, les préformes et les récipients sont mécaniquement maintenus par les peignes et les chariots eux-mêmes positionnés mécaniquement par les vis. Il en résulte un positionnement précis qui facilite le passage des préformes et des récipients.

Il est possible de changer facilement les vis et les peignes en regard afin d'adapter le transfert à la cadence de soufflage. De préférence, les vis et les peignes sont fixés aux éléments de bâti et d'actionneurs les supportant au moyen d'attaches rapides.

Bien entendu, l'invention n'est pas limitée aux modes de réalisation décrits mais englobe toute variante entrant dans le champ de l'invention telle que définie par les revendications.

En particulier, l'installation peut avoir une structure différente de celle décrite et par exemple comprendre :
- un nombre différent de dispositif de transfert,
- une étoile en regard d'un tronçon arrondi,
- un peigne en regard d'un tronçon rectiligne dépourvu de vis,
- une absence d'unités intermédiaire de transfert,
- des chariots pourvus de moyens de déplacement des récipients ou des préformes différentes tels que des pinces de saisie articulées,
- des chariots comportant un nombre différent de galets et par exemple trois...

L'invention est en outre applicable à toute installation de traitement d'articles et à tout type d'articles.

## Revendications

1. Installation de traitement d'articles comportant une première station de traitement, une deuxième station de traitement, et un dispositif de transfert d'articles s'étendant entre les deux stations de traitement, le dispositif de transfert comportant un rail ayant au moins un tronçon rectiligne et définissant une trajectoire de déplacement fermée pour des chariots qui sont montés sur le rail pour se déplacer librement le long de celui-ci et qui sont pourvus chacun de moyens d'entraînement d'au moins un article, le dispositif de transfert comprenant une vis s'étendant le long du tronçon rectiligne du rail et ayant un filet avec lequel coopèrent des doigts solidaires des chariots pour entraîner les chariots le long du tronçon rectiligne, les chariots étant en contact les uns avec les autres pour espacer les articles les uns des autres d'un premier écartement lorsque les chariots ne coopèrent pas avec la vis le long du reste du rail et pour se pousser mutuellement le long du reste du rail sous l'effet du mouvement imprimé par la vis à chaque chariot quittant la vis et entrant en contact avec son prédécesseur, et le filet étant agencé pour espacer les chariots et définir au moins un deuxième écartement supérieur au premier écartement.

2. Installation selon la revendication 1, dans laquelle la vis a un pas qui varie depuis le premier écartement jusqu'au deuxième écartement puis au premier écartement.

3. Installation selon la revendication 1, dans laquelle le chariot comprend un corps sur lequel est montée une broche verticale ayant une extrémité inférieure pourvue d'un organe de saisie d'un article.

4. Installation selon la revendication 3, dans laquelle la broche est montée sur le corps pour pivoter autour de la verticale et possède une portion dentée engrenant sur un engrenage linéaire courant le long du rail pour entraîner la broche en rotation lors du déplacement du chariot.

5. Installation selon la revendication 4, dans laquelle l'engrenage est une courroie crantée.

6. Installation selon la revendication 3, dans laquelle la broche est montée sur le corps pour coulisser entre une position de saisie des articles et une position de libération des articles, et la broche possède une portion coopérant avec un chemin de came fixe pour déplacer les broches entre leurs deux positions.

7. Installation selon la revendication 6, dans laquelle la broche coulisse selon une direction verticale.

8. Installation selon la revendication 1, comportant un organe fixe de support des articles qui s'étend sensiblement le long du rail, chaque chariot comportant un corps pourvu d'un doigt en saillie latérale agencé pour pousser les articles le long de l'organe fixe de support.

9. Installation selon la revendication 1, comportant une première unité intermédiaire de transfert montée tangente entre la première station et le dispositif de transfert et une deuxième unité intermédiaire de transfert montée tangente entre la deuxième station et le dispositif de transfert, les unités de transfert étant agencées pour déplacer les articles en maintenant des écartements respectifs correspondants au premier écartement et au deuxième écartement du dispositif de transfert.

10. Installation selon la revendication 9, dans laquelle la première station est agencée pour traiter les articles successivement, la première unité de transfert est une étoile, la deuxième station est agencée pour traiter les articles par lots et la deuxième unité de transfert est un peigne agencé pour déplacer simultanément plusieurs articles et animé d'une trajectoire de déplacement rectangulaire dont un côté tangente le dispositif de transfert.

11. Installation selon la revendication 10, dans laquelle le peigne s'étend en regard de la vis et est agencé pour maintenir les articles avec un écartement relatif correspondant au deuxième écartement et l'étoile est agencée pour maintenir les articles avec un écartement relatif correspondant au premier écartement.

12. Installation selon la revendication 11, dans laquelle, les articles étant creux, la première station est un tunnel de chauffage des articles qui est disposé en amont par rapport au sens de déplacement des articles et la deuxième station, disposée en aval, est une machine de soufflage des articles qui est agencée pour en faire des récipients.

13. Installation selon la revendication 10, dans laquelle l'étoile s'étend en regard de la vis et est agencée pour maintenir les articles avec un écartement relatif correspondant au deuxième écartement et le peigne est agencé pour maintenir les articles avec un écartement relatif correspondant au premier écartement.

14. Installation selon la revendication 13, dans laquelle, les articles étant creux, la première station est une machine de soufflage des articles qui est agencée pour en faire des récipients et est disposée en amont par rapport au sens de déplacement des articles, et la deuxième station est une machine de remplissage des articles qui est disposée en aval.

15. Installation selon la revendication 13, dans laquelle la vis comprend un tronçon assurant le premier écartement et un tronçon assurant le deuxième écartement et l'étoile et le peigne se trouve en regard chacun d'un des tronçons de la vis.

## Patentansprüche

1. Anlage zur Behandlung von Gegenständen, umfassend eine erste Behandlungsstation, eine zweite Behandlungsstation und eine Vorrichtung zur Übertragung von Gegenständen, die sich zwischen den beiden Behandlungsstationen erstreckt, wobei die Übertragungsvorrichtung eine Schiene umfasst, die mindestens einen geradlinigen Abschnitt hat und eine geschlossene Bewegungsbahn für Wagen bildet, die an der Schiene gelagert sind, um sich frei entlang derselben zu bewegen, und die jeweils mit Antriebsmitteln zum Antrieb mindestens eines Gegenstandes versehen sind, wobei die Übertragungsvorrichtung eine Schnecke umfasst, die sich entlang des geradlinigen Abschnittes der Schiene erstreckt und ein Gewinde hat, mit dem mit den Wagen verbundene Finger zusammenwirken, um die Wagen entlang des geradlinigen Abschnittes anzutreiben, wobei die Wagen miteinander in Kontakt sind, um die Gegenstände zueinander um einen ersten Abstand zu beabstanden, wenn die Wagen entlang des Restes der Schiene nicht mit der Schnecke zusammenwirken, und um sie gegenseitig entlang des Restes der Schiene unter der Wirkung einer Bewegung zu schieben, die von der Schnecke auf jeden Wagen, der die Schnecke verlässt und in Kontakt mit seinem Vorgänger tritt, übertragen wird, und wobei das Gewinde ausgebildet ist, um die Wagen zu beabstanden und mindestens einen zweiten Abstand zu definieren, der größer als der erste Abstand ist.

2. Anlage nach Anspruch 1, bei der die Schnecke eine Teilung hat, die vom ersten Abstand zum zweiten Abstand und danach zum ersten Abstand variiert.

3. Anlage nach Anspruch 1, bei der der Wagen einen Körper umfasst, an dem eine vertikale Spindel angebracht ist, die ein unteres Ende hat, das mit einem Organ zum Ergreifen eines Gegenstandes versehen ist.

4. Anlage nach Anspruch 3, bei der die Spindel an dem Körper angebracht ist, um sich um die Vertikale zu drehen, und einen gezahnten Abschnitt hat, der in ein Lineargetriebe eingreift, das entlang der Schiene läuft, um die Spindel während der Verschiebung des Wagens in Drehung anzutreiben.

5. Anlage nach Anspruch 4, bei der das Getriebe ein Zahnriemen ist.

6. Anlage nach Anspruch 3, bei der die Spindel an dem Körper verschiebbar zwischen einer Position zum Ergreifen der Gegenstände und einer Position zur Freigabe der Gegenstände gelagert ist, und die Spindel einen Abschnitt besitzt, der mit einer ortsfesten Nockenbahn zusammenwirkt, um die Spindeln zwischen ihren beiden Positionen zu verschieben.

7. Anlage nach Anspruch 6, bei der sich die Spindel in einer vertikalen Richtung verschiebt.

8. Anlage nach Anspruch 1, umfassend ein ortsfestes Element zum Tragen der Gegenstände, das sich im Wesentlichen entlang der Schiene erstreckt, wobei jeder Wagen einen Körper umfasst, der mit einem seitlich vorstehenden Finger versehen ist, der ausgebildet ist, um die Gegenstände entlang des ortsfesten Trägerelements zu schieben.

9. Anlage nach Anspruch 1, umfassend eine erste Zwischenübertragungseinheit, die tangential zwischen der ersten Station und der Übertragungsvorrichtung angebracht ist, und eine zweite Zwischenübertragungseinheit, die tangential zwischen der zweiten Station und der Übertragungsvorrichtung angebracht ist, wobei die Übertragungseinheiten ausgebildet sind, um die Gegenstände zu bewegen und dabei die jeweiligen Abstände, die dem ersten Abstand bzw. dem zweiten Abstand der Übertragungsvorrichtung entsprechen, einzuhalten.

10. Anlage nach Anspruch 9, bei der die erste Station ausgebildet ist, um die Gegenstände nacheinander zu behandeln, wobei die erste Übertragungseinheit ein Stern ist, die zweite Station ausgebildet ist, um die Gegenstände chargenweise zu behandeln, und die zweite Übertragungseinheit ein Kamm ist, der ausgebildet ist, um gleichzeitig mehrere Gegenstände zu bewegen, und der in einer rechtwinkligen Verschiebungsbahn bewegt wird, von der eine Seite tangential zur Übertragungsvorrichtung ist.

11. Anlage nach Anspruch 10, bei der sich der Kamm gegenüber der Schnecke erstreckt und ausgebildet ist, um die Gegenstände mit einem relativen Abstand zu halten, der dem zweiten Abstand entspricht, und der Stern ausgebildet ist, um die Gegenstände mit einem relativen Abstand zu halten, der dem ersten Abstand entspricht.

12. Anlage nach Anspruch 11, bei der unter Berücksichtigung, dass die Gegenstände hohl sind, die erste Station ein Tunnel zum Heizen der Gegenstände ist, der stromaufwärts in Bezug auf die Verschiebungsrichtung der Gegenstände angeordnet ist, und die zweite Station, die stromabwärts angeordnet ist, eine Maschine zum Blasen der Gegenstände ist, die ausgebildet ist, um daraus Behälter zu machen.

13. Anlage nach Anspruch 10, bei der sich der Stern gegenüber der Schnecke erstreckt und ausgebildet ist, um die Gegenstände mit einem relativen Abstand zu halten, der dem zweiten Abstand entspricht, und der Kamm ausgebildet ist, um die Gegenstände mit einem relativen Abstand zu halten, der dem ersten Abstand entspricht.

14. Anlage nach Anspruch 13, bei der unter Berücksichtigung, dass die Gegenstände hohl sind, die erste Station eine Maschine zum Blasen von Gegenständen ist, die ausgebildet ist, um daraus Behälter zu machen, und die in Bezug auf die Verschiebungsrichtung der Gegenstände stromaufwärts angeordnet ist, und die zweite Station eine Maschine zum Befüllen der Gegenstände ist, die stromabwärts angeordnet ist.

15. Anlage nach Anspruch 13, bei der die Schnecke einen Abschnitt umfasst, der den ersten Abstand sicherstellt, sowie einen Abschnitt, der den zweiten Abstand sicherstellt, und sich der Stern und der Kamm gegenüber jeweils einem der Abschnitte der Schnecke befinden.

## Claims

1. An installation for processing articles, the installation comprising a first processing station, a second processing station, and an article-transfer device extending between the two processing stations, the transfer device comprising a rail having at least one rectilinear segment and defining a closed travel path for carriages that are mounted on the rail to move freely therealong, each of which is provided with means for driving at least one article, the transfer device comprising a screw extending along the rectilinear segment of the rail and having a thread that co-operates with fingers secured to the carriages in order to drive the carriages along the rectilinear segment, the carriages being in contact with one another for spacing the articles one relative the other at a first spacing when the carriages are not co-operating with the screw, along the rest of the rail and to push against one another along the rest of the rail under the effect of the movement imparted by the screw to each carriage leaving the screw and coming into contact with its predecessor, and the thread of the screw is arranged to hold the carriages at at least one second spacing that is greater than the first spacing.

2. An installation according to claim 1, wherein the screw has a pitch that varies from the first spacing to a second spacing and then back to the first spacing.

3. An installation according to claim 1, wherein the carriage comprises a body having a vertical spindle mounted thereon with a bottom end that is provided with an article-gripper member.

4. An installation according to claim 3, wherein the spindle is mounted on the body to pivot about the vertical and possesses a toothed portion meshing with a linear gear running along the rail in order to drive the spindle in rotation during movement of the carriage.

5. An installation according to claim 4, wherein the gear is a cog belt.

6. An installation according to claim 3, wherein the spindle is mounted on the body to slide between the article-gripping position and an article-release position, and the spindle possesses a portion co-operating with a stationary cam path in order to move the spindles between their two positions.

7. An installation according to claim 6, wherein the spindle slides in a vertical direction.

8. An installation according to claim 1, including a stationary article support member that extends substantially along the rail, each carriage comprising a body provided with a laterally projecting finger arranged to push articles along the stationary support member.

9. An installation according to claim 1, having a first intermediate transfer unit mounted tangentially between the first station and the transfer device and a second intermediate transfer unit mounted tangentially between the second station and the transfer device, the transfer unit being arranged to move the articles while maintaining respective spacings that correspond to the first spacing and to the second spacing of the transfer device.

10. An installation according to claim 9, wherein the first station is arranged to process the articles in succession, the first transfer unit is a star, the second station is arranged to process the articles in batches, and the second transfer unit is a comb arranged to move a plurality of articles simultaneously and movable along a rectangular travel path having one side that is tangential to the transfer device.

11. An installation according to claim 10, wherein the comb extends facing the screw and is arranged to maintain the articles at a relative spacing corresponding to the second spacing, and the star is arranged to maintain the articles at a relative spacing corresponding to the first spacing.

12. An installation according to claim 11, wherein the articles are hollow articles, the station is an article heater tunnel arranged upstream in the travel direction of the articles, and the second station, arranged downstream, is a machine for blowing articles, which machine is arranged to convert them into containers.

13. An installation according to claim 10, wherein the star extends facing the screw and is arranged to maintain the articles at a relative spacing corresponding to the second spacing, and the comb is arranged to maintain the articles at a relative spacing corresponding to the first spacing.

14. An installation according to claim 13, wherein the articles are hollow articles, the first station is an article blowing machine that is arranged to convert them into containers and that is arranged upstream relative to the travel direction of the articles, and the second station is arranged downstream and is an article-filler machine.

15. An installation according to claim 13, wherein the screw has both a segment providing the first spacing and a segment providing the second spacing, and the star and the comb are each arranged facing one of the segments of the screw.
